# EUROPEAN PATENT APPLICATION

(11) **EP 4 455 227 A1**
(43) Date of publication of application: **30.10.2024**
(21) Application number: 23170591.4
(22) Date of filing: 28.04.2023
(51) Int. Cl.: C09D 5/00

(54) **EMULSION SYSTEM CONTAINING ANIONIC LATEX COMPOSITION FOR IMPROVED COATING**

(71) Applicant: BASF SE, 67056 Ludwigshafen am Rhein (DE)
(72) Inventor: NIEDZWIECKI, Daniel Scott, Florham Park, New Jersey 07932 (US); LYON, Matthew Gerard, Wyandotte, MI 48192 (US)
(74) Representative: Maiwald GmbH

(57) **Abstract**

The present invention provides an emulsion system an emulsion system obtainable by a process comprising mixing of an anionic latex composition comprising at least one acrylate polymer and at least one anionic surfactant; and at least one cationic surfactant, wherein the molar ratio of the at least one anionic surfactant to the at least one cationic surfactant is in the range of 0.4:1 to 9:1, wherein the cationic surfactant or anionic surfactant or both contains 2 to 30 ethylene oxide (EO) units per molecule. The present invention also provides a process for the preparation of the emulsion system according to the present invention, wherein said process comprises preparing the anionic latex composition comprising at least one acrylate polymer and at least one anionic surfactant, combining the at least one cationic surfactant with the anionic latex composition to form a mixture, and mixing the mixture. The present invention further provides a coating composition comprising the emulsion system according to present invention. The present invention still further provides use of the emulsion system according to the present invention as a coating paint.

## Description

### FIELD OF THE INVENTION

The present invention relates to an emulsion system containing anionic latex composition. The present invention also relates to a process for the preparation of the emulsion system.

### BACKGROUND OF THE INVENTION

Latexes form a class of compounds that are polymers that can be made up of different monomers. What they have in common is they are formed in an emulsion polymerization process. The monomers are fed into a reaction tank, and with the aid of anionic surfactants, emulsified and then polymerized with an initiator. The resulting latex has certain inherent properties and can be further modified with other added products such as surfactants, polymers etc. The products added after the reaction are known as "post-adds" in the industry.

Cationic surfactants are ionic surfactants with a positive charge on the hydrophilic group. When added to a mixture containing anionic surfactants, the two can be attracted to each other due to the opposite charges. The resulting paired surfactant can be called as a "catanionic" surfactant and can have different properties than either cationic or anionic surfactant on their own.

### OBJECT OF THE INVENTION

An object of the present invention is to provide an emulsion system having improved stability.

Another object of the present invention to provide the emulsion system having improved water resistance when used as a coating paint.

Still another object of the present invention is to provide an emulsion system having improved stain resistance and solvent resistance when used as a coating paint.

Yet another object of the present invention is to provide a simple process of making an emulsion system.

### SUMMARY OF THE INVENTION

The present invention provides an emulsion system obtainable by a process comprising mixing of a) an anionic latex composition comprising at least one acrylate polymer and at least one anionic surfactant; and b) at least one cationic surfactant, wherein the molar ratio of the at least one anionic surfactant to the at least one cationic surfactant is in the range of 0.4:1 to 9: 1, wherein the cationic surfactant or anionic surfactant or both contains 2 to 30 ethylene oxide (EO) units per molecule.

The present invention also provides a process for the preparation of the emulsion system according to the present invention, wherein the process comprises preparing the anionic latex composition comprising at least one acrylate polymer and at least one anionic surfactant, combining the at least one cationic surfactant with the anionic latex composition to form a mixture, and mixing the mixture, wherein the cationic surfactant or anionic surfactant or both contains 2 to 30 ethylene oxide (EO) units per molecule.

The present invention further provides a coating composition comprising the emulsion system according to present invention.

The present invention still further provides use of the emulsion system according to the present invention as a coating, especially as a coating paint.

### BRIEF DESCRIPTION OF THE DRAWINGS

In order to provide an understanding of the embodiments of the invention, reference is made to the appended drawings, which are not necessarily drawn to scale, and in which reference numerals refer to components of exemplary embodiments of the invention. The drawings are exemplary only and should not be construed as limiting the invention. The above and other features of the presently claimed invention, their nature, and various advantages will become more apparent upon consideration of the following detailed description, taken in conjunction with the accompanying drawings:

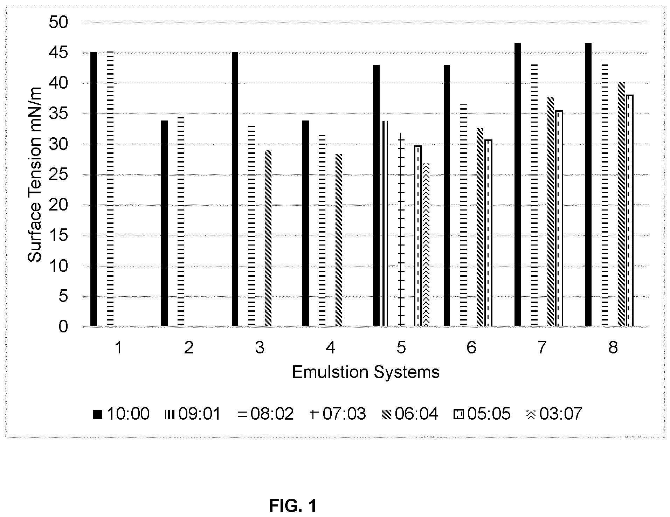

FIGURE 1 illustrates surface tension data of different emulsion systems.

### DETAILED DESCRIPTION

The presently claimed invention will be described more fully hereafter. The presently claimed invention may be embodied in many different forms and should not be construed as limited to the embodiments set forth herein; rather, these embodiments are provided so that this presently claimed invention will be thorough and complete, and will fully convey the scope of the invention to those skilled in the art. No language in the specification should be construed as indicating any non-claimed element as essential to the practice of the disclosed materials and methods.

All methods described herein can be performed in any suitable order unless otherwise indicated herein or otherwise clearly contradicted by context. The use of any and all examples, or exemplary language (e.g., "such as") provided herein, is intended merely to better illustrate the materials and methods and does not pose a limitation on the scope unless otherwise claimed.

### Definitions:

The use of the terms "a", "an", "the", and similar referents in the context of describing the materials and methods discussed herein (especially in the context of the following claims) are to be construed to cover both the singular and the plural, unless otherwise indicated herein or clearly contradicted by context.

Recitation of ranges of values herein are merely intended to serve as a shorthand method of referring individually to each separate value falling within the range, unless otherwise indicated herein, and each separate value is incorporated into the specification as if it were individually recited herein.

An "emulsion", "emulsion solution", "emulsion formulation", "emulsion composition" or emulsion system herein interchangeably means a polymer or a copolymer in the form of small particles (e.g., usually <500 nm) emulsified by a surfactant composition and dispersed in an aqueous system.

Anionic surfactant means surfactants that carry a negatively charged head group.

Cationic surfactant means surfactants that carry a positively charged head group.

Molar ratio is the ratio between two coefficients in a balanced chemical equation. The molar ratio is also known as the mole ratio or mole-to-mole ratio.

The term "surface" is used for the interface between matter and air, or matter and vacuum.

The term 'interface' is a boundary between two special regions occupied by different matter or by matter in different physical state.

The term "surface tension" is defined as the work (energy) that is needed to increase the surface by a defined area. Surface tension can be best explained by the behaviour of molecules at the surface of a liquid. Cohesive forces between the molecules in the surface layer are not evenly distributed to all sides compared to molecules in the inner phase. The result of these unbalanced attraction forces is the so-called surface tension. For surfaces of solid materials, the term "surface energy" is commonly used. The surface energy of solid surfaces can be indirectly determined by contact angle measurements with liquids with a known surface tension. Consequently, the surface tension is typically given in units of mJ/m², dyn/cm or mN/m.

The term "water absorption" is the capacity of a plastic or a polymer or any composition to absorb moisture from its environment. Water absorption is used to determine the amount of water absorbed under specified conditions. Factors affecting water absorption include type of polymer, additives used, temperature and length of exposure.

The term "stain resistant" is the ability of material to withstand discoloration. In other words, it's a material/coat/paint that doesn't absorb dirt and stains.

The term "ethylene oxide (EO) units per molecule" means EO units present in a molecule in their polymerized form ("-CH2-CH2-O-").

### Emulsion System:

The presently claimed invention provides an emulsion system obtainable by a process comprising mixing of an anionic latex composition comprising at least one acrylate polymer and at least one anionic surfactant; and at least one cationic surfactant, wherein the molar ratio of the at least one anionic surfactant to the at least one cationic surfactant is in the range of 0.4:1 to 9: 1, wherein the cationic surfactant or anionic surfactant or both contains 2 to 30 ethylene oxide (EO) units per molecule. Preferably, the cationic surfactant is post-added to the anionic latex composition while maintaining the molar ratio of the anionic surfactant to the cationic surfactant in the range of 0.4:1 to 9:1. Preferably, the anionic latex composition used is essentially free of cationic surfactant. The term "essentially free" refers to no cationic surfactant present in the latex composition. It may be present as an impurity in an amount of less than 0.0001 wt.%.

It is found that due to the twin tailed nature of the surfactant, and neutralized charges, expected property modifications are increased hydrophobicity and lower surface tension due to tighter packing at interfaces. The reduced surface tension provides increased stability to the emulsion system.

The term "emulsion stability" can be defined as the system's ability to resist changes in its physicochemical properties over time.

### Anionic Surfactant:

The anionic surfactant is preferably selected from sodium lauryl ethoxylate sulphate, sodium lauryl ethoxylate phosphate, or a combination thereof, each containing ethylene oxide (EO) units per molecule.

Alternatively, the anionic surfactant is preferably selected from sodium dodecyl sulphate, sodium dioctyl sulfosuccinate, or combinations thereof.

More preferably, when the anionic surfactant such as sodium dodecyl sulphate, sodium dioctyl sulfosuccinate, or combinations thereof is used, the cationic surfactant added to make the emulsion system contains 2 to 6 ethylene oxide (EO) units per molecule.

The anionic surfactant is more preferably selected from sodium lauryl ethoxylate sulphate, and sodium lauryl ethoxylate phosphate, each containing 2 to 30 ethylene oxide (EO) units per molecule, or combinations thereof. Even more preferably, the anionic surfactant is sodium lauryl ethoxylate sulphate, or sodium lauryl ethoxylate phosphate, each containing 2 to 30 ethylene oxide (EO) units per molecule. Most preferably, the anionic surfactant is sodium lauryl ethoxylate sulphate, or sodium lauryl ethoxylate phosphate, each containing 2 to 12 ethylene oxide (EO) units per molecule. Even most preferably, the anionic surfactant is sodium lauryl ethoxylate sulphate, or sodium lauryl ethoxylate phosphate, each containing 2 to 7 ethylene oxide (EO) units per molecule.

Preferably, the amount of anionic surfactant is ranging from 0.001 to 10 % by weight. More preferably, the amount of anionic surfactant is ranging from 0.01 to 5.0 % by weight. Even more preferably, the amount of anionic surfactant is ranging from 0.01 to 3.0 % by weight.

### Cationic surfactant:

The cationic surfactant is preferably selected from cetyltrimethylammonium chloride, or 2[(2-hydroxydodecoxy) ethoxy]ethyl-trimethyl ammonium chloride containing 0 to 6 ethylene oxide (EO) units per molecule, or combinations thereof.

The cationic surfactant is more preferably selected from cetyltrimethylammonium chloride, or 2[(2-hydroxydodecoxy) ethoxy]ethyl-trimethyl ammonium chloride containing 2 to 6 ethylene oxide (EO) units per molecule, or combinations thereof. Even more preferably, the cationic surfactant is 2[(2-hydroxydodecoxy) ethoxy]ethyl-trimethyl ammonium chloride containing 2 to 6 ethylene oxide (EO) units per molecule.

Preferably, the amount of cationic surfactant is ranging from 0.001 to 10 % by weight. More preferably, the amount of cationic surfactant is ranging from 0.01 to 5.0 % by weight. Even more preferably, the amount of cationic surfactant is ranging from 0.01 to 3.0 % by weight.

### Molar ratio:

The molar ratio of the at least one anionic surfactant to the at least one cationic surfactant is in the range of 0.4:1 to 9: 1. Preferably, the molar ratio of the at least one anionic surfactant to the at least one cationic surfactant is 3: 1 to 1:1. More preferably, the molar ratio of the at least one anionic surfactant to the at least one cationic surfactant is 1:1. Most preferably, the amount of cationic surfactant is not higher than the amount of at least one anionic surfactant therein.

Preferably, the emulsion system comprises:
a) the anionic latex composition comprising sodium lauryl ethoxylate sulphate, or sodium lauryl ethoxylate phosphate, each containing 2 to 30 ethylene oxide (EO) units per molecule; and
b) cetyltrimethylammonium chloride,
wherein the molar ratio of the total amount of sodium lauryl ethoxylate sulphate or sodium lauryl ethoxylate phosphate to cetyltrimethylammonium chloride present in the emulsion system is in the range of 3: 1 to 1:1.

Preferably, the emulsion system comprises:
a) the anionic latex composition comprising sodium dodecyl sulphate; and
b) 2[2-(2-hydroxydodecoxy)ethoxy]ethyl-trimethylammonium chloride,
wherein the molar ratio of the total amount of sodium dodecyl sulphate to 2[2-(2-hydroxydodecoxy)ethoxy]ethyl-trimethylammonium chloride present in the emulsion system is in the range of 3: 1 to 1:1.

Preferably, the emulsion system comprises:
a) the anionic latex composition comprising sodium lauryl ethoxylate sulphate; and
b) 2[2-(2-hydroxydodecoxy)ethoxy]ethyl-trimethyl ammonium chloride,
wherein the molar ratio of the total amount of sodium lauryl ethoxylate sulphate to 2[2-(2-hydroxydodecoxy)ethoxy]ethyl-trimethyl ammonium chloride present in the emulsion system is in the range of 3: 1 to 1:1.

The anionic latex composition comprises at least one acrylate polymer. Preferably, the acrylate polymer comprises one or more monomers in polymerized form selected from methyl methacrylate, 2-ethylhexyl acrylate, ethyl acrylate, (meth)acrylic acid, ethyl imidazolidone methacrylate, n-butyl acrylate, n-dodecyl methacrylate, methyl methacrylate, 2-ethylbutyl acrylate, hexyl acrylate, 2-ethylhexyl acrylate, nonyl acrylate, octyl acrylate, sec-butyl acrylate, dodecyl acrylate, isobutyl acrylate, isopropyl acrylate, styrene, vinyl acetate or combinations thereof. Preferably, the acrylate polymer comprises one or more monomers in polymerized form selected from methyl methacrylate, 2-ethylhexyl acrylate, or a combination thereof.

Preferably, the amount of acrylate polymer is in the range of 5.0 to 70 % by weight. More preferably, the amount of acrylate polymer is in the range of 10 to 60 % by weight. Even more preferably, the amount of acrylate polymer is in the range of 15 to 50 % by weight.

Preferably, the molecular weight of the acrylate polymer is in the range of 500-1000000 Daltons. More preferably, the molecular weight of the acrylate polymer is in the range of 1000-100000 Daltons. Preferably, the molecular weight (Mn) of the acrylate polymer was determined by means of gel permeation chromatography (GPC) using a refractometer as the detector. The mobile phase used was tetrahydrofuran (THF, 1mL/min, 35° C), the standard employed for determining the molecular weight being polystyrene (PS).

Preferably, the acrylate polymer further comprises one or more monomers in polymerized form selected from butadiene, styrene, vinyl acetate, or combinations thereof.

Preferably, the anionic latex composition further comprises polystyrene seeds and at least one additive. Preferably, the additive is selected from the group of initiators, pH adjusting agents or any combinations thereof.

The term "initiator" (also known as polymer initiator) refers to a source of any chemical species that reacts with a monomer (single molecule that can form chemical bonds) to form an intermediate compound capable of linking successively with a large number of other monomers into a polymeric compound. E.g. Persulfates are suited for polymer initiation and are used to prepare latex polymers for paints, coatings etc.

Preferably, the initiator is selected from potassium persulfate, ammonium persulfate, sodium persulfate, or any combination thereof. More preferably, the initiator is potassium persulfate.

Preferably, the pH adjusting agent is selected from sodium bicarbonate, diethanolamine, triethanolamine, ammonia, sodium hydroxide, sodium carbonate, potassium hydroxide, ammonium carbonate, sodium phosphate, or any combination thereof. Preferably, the pH adjusting agent is sodium bicarbonate.

The amount of initiator and pH adjusting agent is added as per the requirement which is known to a person skilled in the art.

### Preparation of the emulsion system:

In accordance with another aspect of the present invention there is also provided a process for the preparation of the emulsion system. The process for preparing the anionic latex composition comprising at least one acrylate polymer and at least one anionic surfactant comprises, combining the at least one cationic surfactant with the anionic latex composition to form a mixture, and mixing the mixture, wherein the cationic surfactant or anionic surfactant or both contains 2 to 30 ethylene oxide (EO) units per molecule.

The molar ratio of the at least one anionic surfactant to the at least one cationic surfactant is in the range of 0.4:1 to 9:1. Preferably, the molar ratio of the at least one anionic surfactant to the at least one cationic surfactant is in the range of 3:1 to 1:1.

Preferably, the step of preparing the anionic latex composition comprises the following steps:
In the first step (Step (a)), at least one first initiator, water and polystyrene seeds are mixed in a reactor to obtain a mixture. The pH of the mixture is adjusted using at least one pH adjusting agent.

Preferably, the first initiator is selected from potassium persulfate, ammonium persulfate, sodium persulfate, or any combination thereof. More preferably, the first initiator is potassium persulfate.

Preferably, the pH adjusting agent is selected from sodium bicarbonate, diethanolamine, triethanolamine, ammonia, sodium hydroxide, sodium carbonate, potassium hydroxide, ammonium carbonate, sodium phosphate, or any combination thereof. Preferably, the pH adjusting agent is sodium bicarbonate.

Preferably, the step (a) is carried out at a temperature ranging from 30 to 95⁰C. More preferably, the step (a) is carried out at a temperature ranging from 50 to 90⁰C. Most preferably, the step (a) is carried out at a temperature ranging from 70 to 90⁰C.

Preferably, the step (a) is carried out using an agitator rotating at a speed of 80 to 120 rpm. More preferably, the step (a) is carried out using an agitator rotating at a speed of 90 to 110 rpm.

In the second step (Step (b)), at least one acrylate and the at least one anionic surfactant are mixed in a pre-emulsion flask to obtain an emulsion.

In third step (Step (c)), at least one second initiator is dissolved in water in an initiator flask to obtain a solution.

Preferably, the second initiator is selected from potassium persulfate, ammonium persulfate, sodium persulfate, or any combination thereof. More preferably, the second initiator is potassium persulfate.

In fourth step (Step (d), the emulsion obtained in step (b) and the solution of step (c) are transferred to the reactor containing the mixture of step (a).

Preferably, the step (d) i.e. transferring of the emulsion (b) and the solution (c) in portion is carried out for a period ranging from 60 to 100 minutes. More preferably, the step (d) i.e. transferring of the emulsion (b) and the solution (c) in portion is carried out for a period ranging from 75 to 95 minutes.

In fifth step (Step (e), the so obtained mixture from step (d) is reacted.

Preferably, the step (e) is carried out at a temperature in the range from 70 to 95 ⁰C. More preferably, the step (e) is carried out at a temperature in the range from 80 to 90 ⁰C.

In the final step, the pH value of the reaction mixture obtained in step (e) is adjusted. followed by mixing, cooling, and adjusting pH to obtain the anionic latex composition.

Preferably, the pH adjusting agent is selected from sodium bicarbonate, diethanolamine, triethanolamine, ammonia, sodium hydroxide, sodium carbonate, potassium hydroxide, ammonium carbonate, sodium phosphate, or any combination thereof. Preferably, the pH adjusting agent is sodium bicarbonate.

Preferably, in step (f), the pH value of the reaction mixture is adjusted to pH 6.5 to 8.5. More preferably, in step (f), the pH value of the reaction mixture is adjusted to pH 6.8 to 7.2.

Preferably, the process further comprises a step of cooling the reaction mixture obtained from step (e) before adjusting the pH value.

In accordance with still another aspect of the present invention, there is also provided a coating composition comprising the emulsion system according to the present invention.

In accordance with yet another aspect of the present invention, there is also provided use of the emulsion system according to the present invention as a coating paint.

Aspects of the presently claimed invention are more fully illustrated by the following examples, which are set forth to illustrate certain aspects of the present invention and are not to be construed as limiting thereof.

### Example 1: Preparation of anionic latex composition

To a reactor, the "reactor charge" components (0.07 g of potassium persulfate, 0.15 g of sodium bicarbonate, and 78.2 g of water) were added, warmed to 85⁰C and mixed at 100 rpm using an agitator. Polystyrene seeds (0.8 g) were also added to control particle size.

To a pre-emulsion flask the "pre-emulsion" components (74.5 g of methyl methacrylate, 65.5 g of 2-ethylhexyl acrylate, 2.78 g of anionic surfactant and 50.9 g of water) were added and mixed at 100 rpm to emulsify.

To an initiator flask the "initiator" components (0.55 g of potassium persulfate and 10.9 g of water) were added and mixed until they are dissolved.

The pre-emulsion and initiator flasks were fed to the reactor over 80 and 90 minutes respectively to obtain a mixture.

The obtained mixture in the reactor was mixed for 1 additional hour at 85⁰C and then cooled to room temperature.

Finally, the anionic latex composition was obtained by adding and mixing neutralization components (6.2 g of 8% sodium bicarbonate) to adjust a pH of 7.

### Example 1A: Sodium dodecyl sulphate (SDS), C₁₂H₂₅-SO₄Na

The process of example 1 was repeated using SDS as an anionic surfactant.

### Example 1B: Sodium dioctyl sulfosuccinate (SDOS), C₂₀H₃₇NaO₇S. The process of example 1 was repeated using SDOS as an anionic surfactant.

### Example 2: Preparation of emulsion system (Comparative examples: 2C-2E)

The emulsion system was prepared by adding and mixing the cationic surfactant into the anionic latex composition containing anionic surfactant as prepared in example 1 at a predetermined molar ratio of anionic to cationic surfactant. The mixing is carried out using a paddle mixer at 100 to 200 rpm.

### Example 2C: Sodium dodecyl sulphate (SDS) with cetyltrimethylammonium chloride, C₁₉H₄₂N.Cl (CTAC).

The anionic latex composition was prepared as per example 1 using SDS as an anionic surfactant. To this latex composition, cetyltrimethylammonium chloride (CTAC) as a cationic surfactant was added in a molar ratio of 8:2 followed by mixing to obtain the emulsion system.

### Example 2D: Sodium dioctyl sulfosuccinate (SDOS) with cetyltrimethylammonium chloride, CTAC.

The process of example 2C was repeated, except SDOS was used instead of SDS. The molar ratio of SDOS to CTAC was 8:2 and 6:4.

### Example 2E: Sodium dodecyl benzyl sulfonate, C₁₈H₃₀NaO₃S (SDBS, LAS) with cetyltrimethylammonium chloride, CTAC.

The process of example 2C was repeated, except SDBS was used instead of SDS.

### Inventive Examples: Examples 3-9

### Example 3: Sodium dodecyl sulphate (SDS), with 2[2-(2-hydroxydodecoxy)ethoxy]ethyl-trimethylammonium chloride (C[EO]TAC).

The process of example 2C was repeated except C[EO]TAC was used instead of CTAC. The molar ratio of SDS to C[EO]TAC was 8:2 and 6:4.

### Example 4: Sodium dioctyl sulfosuccinate (SDOS) with 2[2-(2-hydroxydodecoxy)ethoxy]ethyl-trimethylammonium chloride (C[EO]TAC).

The process of example 2C was repeated except SDOS was used instead of SDS and C[EO]TAC was used instead of CTAC. The molar ratio of SDOS to C[EO]TAC was 8:2 and 6:4.

### Example 5: Sodium lauryl ethoxylate sulphate (SLES, FES 32), C₁₂₋₄O[EO]-SO4Na with Cetyltrimethylammonium chloride, CTAC.

The process of example 2C was repeated except SLES was used instead of SDS.

Various emulsion systems were prepared by varying the molar ratio of SLES to CTAC such as 9:1, 7:3, 5:5, and 3:7.

### Example 6: Sodium lauryl ethoxylate sulphate (SLES, FES 32), C₁₂₋₄ O[EO]-SO₄Na with 2[2-(2-hydroxydodecoxy)ethoxy]ethyl-trimethylammonium chloride (C[EO]TAC).

The process of example 2C was repeated except SLES was used instead of SDS and C[EO]TAC was used instead of CTAC.

Various emulsion systems were prepared by varying the molar ratio of SLES to C[EO]TAC such as 8:2, 6:4 and 5:5.

### Example 7: Sodium lauryl ethoxylate sulphate (SLES, FES 993), C₁₂₋₃₀O[EO]-SO₄Na with cetyltrimethylammonium chloride, CTAC.

The process of example 2C was repeated except SLES (FES 993) was used instead of SDS.

### Example 8: Sodium lauryl ethoxylate sulphate (SLES, FES 993), C₁₂₋₃₀O [EO]-SO₄Na with 2[2-(2-hydroxydodecoxy) ethoxy]ethyl-trimethylammonium chloride (C[EO]TAC).

The process of example 2C was repeated except SLES (FES 993) was used instead of SDS and (C[EO]TAC) was used instead of CTAC.

Various emulsion systems were prepared by varying the molar ratio of SLES to CTAC such as 8:2, 6:4 and 5:5.

### Example 9: Sodium dodecyl benzyl sulfonate (SDBS) with 2[2-(2-hydroxydodecoxy)ethoxy]ethyl-trimethyl ammonium chloride (C[EO]TAC).

The process of example 2C was repeated except C[EO]TAC was used instead of CTAC and sodium dodecyl benzyl sulfonate (SDBS) was used instead of sodium dodecyl sulphate (SDS).

### Example 10: Testing

### A. Surface tension measurement:

All static surface tension measurements were conducted on a KRUSS K100 tensiometer using a standard Wilhelmy plate at room temperature. Unless otherwise specified, the measurement temperature was 20-25 °C. Each ion pair emulsion polymer formulation was dissolved in deionised water (DI water) to yield a concentration of 1000 PPM. The reported values are an average of 10 measurements at minimum which give a standard deviation of 0.15 mN/m.

The observations with respect to surface tension are provided herein below:
- Example 1A (10:0, only SDS, in absence of cationic surfactant) shows surface tension of 45.14 mN/m.
- Example 1B (10:0, only SDOS, in absence of cationic surfactant) shows surface tension of 33.83 mN/m.
- Example 2C (SDS+CTAC) at 8:2 shows surface tension of 45.38 mN/m.
- Example 2D (SDOS+CTAC) at 8:2 molar ratio shows surface tension of 34.83 mN/m and at 6:4 molar ratio shows surface tension of 35 mN/m.

The results shows that the emulsion systems of examples 2C-2D do not provide lowering of surface tension even after addition of cationic surfactant.
- Example 3 (SDS+C[EO]TAC) at 10:0 molar ratio shows surface tension of 45.14 mN/m, which is lowered to 33 mN/m and 29 mN/m at 8:2 molar ratio and 6:4 molar ratio respectively.
- Example 4 (SDOS+C[EO]TAC) at 10:0 molar ratio shows surface tension of 33.83 mN/m, which is lowered to 31.75 mN/m and 28.38 mN/m at 8:2 molar ratio and 6:4 molar ratio respectively.
- Example 5 (SLES (FES 32) CTAC) at 10:0 molar ratio shows surface tension of 43.0 mN/m, which is lowered to 33.80 mN/m, 31.89 mN/m, 29.60 mN/m and 26.86 mN/m at 9:1 molar ratio, 7:3 molar ratio, 5:5 molar ratio and 3:7 molar ratio respectively.
- Example 6 (SLES (FES32) +C[EO]TAC) at 10:0 molar ratio shows surface tension of 43.0 mN/m, which is lowered to 36.5 mN/m, 32.63 mN/m, and 30.66 mN/m at 8:2 molar ratio, 6:4 molar ratio, and 5:5 molar ratio respectively.
- Example 7(SLES (FES 993) +CTAC) at 10:0 molar ratio shows surface tension of 46.6 mN/m, which is lowered to 43.5 mN/m, 37.7 mN/m, and 35.4 mN/m at 8:2 molar ratio, 6:4 molar ratio, and 5:5 molar ratio respectively.
- Example 8(SLES (FES 993) + C[EO]TAC) at 10:0 molar ratio shows surface tension of 46.6 mN/m, which is lowered to 43.66 mN/m, 40.14 mN/m, and 38 mN/m at 8:2 molar ratio, 6:4 molar ratio, and 5:5 molar ratio respectively.

^{∗}Disponil^{®} FES: sodium salts of fatty alcohol ethersulfates with differing ethoxylation degrees and the hydrophobe is based on a native C₁₂-C₁₄ fatty alcohol.
- General formula: RO(CH₂CH₂O)ₓ SO₃Na
- R(FES)=C₁₂-C₁₄
- X=2,4,7,12,20,30,50

| | Unit | FES27 | FES32 | FES 147 | FES 993 | FES 77 | FES 61 |
|---|---|---|---|---|---|---|---|
| Degree of ethoxylation | n EO | ∼2 | ∼4 | ∼7 | ∼12 | ∼30 | ∼50 |

- FES 32: Sodium lauryl ethoxylate sulphate or sodium dodecyl ethoxylate sulfate (C₁₂H₂₅ (OCH₂CH₂)₄OSO₃ ⁻Na⁺)
- FES 993: Sodium lauryl ethoxylate sulphate (C₁₂H₂₅(OCH₂CH₂)₁₂-OSO₃ ⁻Na⁺

The results shows that the emulsion systems of the presently claimed invention as illustrated in examples 3-8 provide significant lowering of surface tension after addition of a cationic surfactant. A comparative chart is provided in Figure 1, wherein vertical axis represents surface tension value and horizontal axis represents various emulsion systems prepared, in which 1 denotes example 2C, 2 denotes example 2D, 3 denotes example 3, 4 denotes example 4, 5 denotes example 5, 6 denotes example 6, 7 denotes example 7 and 8 denotes example 8.

The emulsion systems of examples 3-8 also showed found to be stable when checked for phase separation and precipitation. These emulsion systems were then used to prepare plaques. The obtained plaques were stable with absence of any precipitation due to soluble ion pair. The clarity and opacity were found to be optimum. The coating of these emulsion systems created smooth and glossy appearance when coated on the surface.

### B. Water absorption measurement:

The ion pair formulations as described in examples 2-9 were prepared by adding cationic surfactant to the anionic latex composition. 2 grams of prepared formulations were then poured into 1-inch by 1-inch square silicone trays and placed in an oven at 50 °C overnight to cure for 48 hours. The plaque was then removed from the tray and an initial weight was taken. The plaques were prepared in triplicate and placed in a jar full of water, set on an orbital shaker at 50 rpm, and submerged for 24 hrs. Each plaque was then removed, patted dry with paper towel and allowed to sit open to air for 10 minutes. The plaque surface was dried again with a Kim wipe and weighed. The reported water absorption measurements were taken as the difference between the final weight and the initial weight and reported as a percentage of the original weight. The values are reported as an average of the triplicate plaques.

**Table 1: Water absorption (% by wt.)**

| | |
|---|---|
| The observations w. r. t. the water absorption (% by wt.) are provided herein below: | |
| The observations with respect to water absorption are provided herein below: | |
| | - Example 2A (10:0, only SDS, in absence of cationic surfactant) shows water absorption of 14.7 % by wt. |
| | - Example 2B (10:0, only SDOS, in absence of cationic surfactant) shows water absorption of 5.99 % by wt. |
| | - Example 3 (SDS+C[EO]TAC) at 10:0 molar ratio shows water absorption of 14.7 % by wt. which is lowered to 10.61 % by wt. at 8:2 molar ratio. |
| | - Example 4 (SDOS+C[EO]TAC) at 10:0 molar ratio shows water absorption of 5.99 % by wt. which is lowered to 4.58 % by wt. at 8:2 molar ratio. |
| | - Example 5 (SLES (FES32)+CTAC) at 10:0 molar ratio shows water absorption of 6.22 % by wt., which is lowered to 2.91 % by wt., and 5.15 % by wt. at 8:2 molar ratio and 6:4 molar ratio respectively. |
| | - Example 6(SLES (FES 32)+C[EO]TAC) at 10:0 molar ratio shows water absorption of 5.10 % by wt., which is lowered to 4.42 % by wt., and 4.97 % by wt. at 8:2 molar ratio and 6:4 molar ratio respectively. |

The results shows that the emulsion systems of the present invention provide significant reduction of water absorption (~13 to ~40 %) post addition of cationic surfactant.

The reduction in water absorption (i.e. water resistance) improves the durability of coating or paint as well as the dirt resistance.

### C. Stain resistance measurement:

A coating of the given ion pair emulsion polymer formulation (emulsion system of the present invention) was drawn down with a #6 bar on a clean stainless sheet. The coating was cured in open air for 2 hours. A drop of French's yellow mustard was then placed on the surface in triplicate, covered and cured for 5 minutes, 1 hour and up to 24 hrs to stain. At the given time points, the mustard droplet was removed with a paper towel, and the stain was scored on a scale of 1 to 5, 1 being hardly visible and 5 being very visible. Scoring was conducted visually.

The results are shown in the following table:

**Table 2: Stain resistance after 24 hours**

| Score | 1 | 2 | 3 | 4 | 5 |
|---|---|---|---|---|---|
| Comparative Example 2A (Only SDS) | | | | X | |
| Inventive Example (Example 3) (SDS and C[EO]TAC), 9:1 | | X | | | |
| Inventive Example (Example 3) (SDS and C[EO]TAC), 8:2 | | | X | | |

The results shows that the inventive examples provide improved stain resistance compared to comparative example.

Findings:
1) The following emulsion systems containing specific anionic surfactant and cationic surfactant in a specific molar ratio are efficient to provide the desired characteristics such as lower surface tension, improved hydrophobicity and improved stain resistance:
   a. sodium lauryl ethoxylate sulphate or sodium lauryl ethoxylate phosphate with cetyltrimethylammonium chloride,
   b. sodium dodecyl sulphate with 2[2-(2-hydroxydodecoxy)ethoxy]ethyl-trimethylammonium chloride,
   c. sodium dodecyl benzyl sulfonate with 2[2-(2-hydroxydodecoxy)ethoxy]ethyl-trimethyl ammonium chloride,
   d. sodium lauryl ethoxylate sulphate with 2[2-(2-hydroxydodecoxy)ethoxy]ethyl-trimethyl ammonium chloride,
   e. Sodium dioctyl sulfosuccinate with 2[2-(2-hydroxydodecoxy)ethoxy]ethyl-trimethyl ammonium chloride.
2) The following emulsion systems are found to be non-efficient to provide the desired characteristics:
   a) Sodium dioctyl sulfosuccinate with cetyltrimethylammonium chloride,
   b) Sodium dodecyl sulphate with cetyltrimethylammonium chloride,
   c) Sodium dodecyl benzyl sulfonate with cetyltrimethylammonium chloride.

The invention is further described by the following embodiments. The features of each of the embodiments are combinable with any of the other embodiments where appropriate and practical.

### Embodiment 1:

The present invention provides emulsion system obtainable by a process comprising mixing of an anionic latex composition comprising at least one acrylate polymer and at least one anionic surfactant; and at least one cationic surfactant, wherein the molar ratio of the at least one anionic surfactant to the at least one cationic surfactant is in the range of 0.4:1 to 9: 1, wherein the cationic surfactant or anionic surfactant or both contains 2 to 30 ethylene oxide (EO) units per molecule.

### Embodiment 2:

The emulsion system according to embodiment 1, wherein the at least one anionic surfactant is selected from the group of sodium lauryl ethoxylate sulphate, sodium lauryl ethoxylate phosphate, sodium dodecyl sulphate, sodium dioctyl sulfosuccinate, and combinations thereof.

### Embodiment 3:

The emulsion system according to embodiment 1, wherein the at least one anionic surfactant is sodium lauryl ethoxylate sulphate, or sodium lauryl ethoxylate phosphate, each containing 2 to 30 ethylene oxide (EO) units per molecule.

### Embodiment 4:

The emulsion system according to embodiment 1, wherein the at least one anionic surfactant is sodium lauryl ethoxylate sulphate, or sodium lauryl ethoxylate phosphate, each containing 2 to 12 ethylene oxide (EO) units per molecule.

### Embodiment 5:

The emulsion system according to embodiment 1, wherein the at least one anionic surfactant is sodium lauryl ethoxylate sulphate, or sodium lauryl ethoxylate phosphate, each containing 2 to 7 ethylene oxide (EO) units per molecule.

### Embodiment 6:

The emulsion system according to any of embodiments 1 to 5, wherein the at least one cationic surfactant is selected from the group of cetyltrimethylammonium chloride, 2[(2-hydroxydodecoxy) ethoxy]ethyl-trimethyl ammonium chloride containing 2 to 6 ethylene oxide (EO) units per molecule, and combinations thereof.

### Embodiment 7:

The emulsion system according to any of embodiments 1 to 6, wherein the molar ratio of the at least one anionic surfactant to the at least one cationic surfactant is 3:1 to 1:1.

### Embodiment 8:

The emulsion system according to any of embodiments 1 to 7, wherein the molar ratio of the at least one anionic surfactant to the at least one cationic surfactant is 1: 1.

### Embodiment 9:

The emulsion system according to any of embodiments 1 to 8, wherein the amount of the at least one cationic surfactant in the emulsion system is not higher than the amount of at least one anionic surfactant therein.

### Embodiment 10:

The emulsion system according to any of embodiments 1 to 9, wherein the acrylate polymer comprising one or more monomers in polymerized form selected from the group of methyl methacrylate, 2-ethylhexyl acrylate, ethyl acrylate, (meth)acrylic acid, ethyl imidazolidone methacrylate, n-butyl acrylate, n-dodecyl methacrylate, methyl methacrylate, 2-ethylbutyl acrylate, hexyl acrylate, 2-ethylhexyl acrylate, nonyl acrylate, octyl acrylate, sec-butyl acrylate, dodecyl acrylate, isobutyl acrylate, isopropyl acrylate, and combinations thereof.

### Embodiment 11:

The emulsion system according to any of embodiments 1 to 10, wherein the acrylate polymer further comprises one or more monomers in polymerized form selected from butadiene, styrene, vinyl acetate, or combinations thereof.

### Embodiment 12:

The emulsion system according to any of embodiments 1 to 11, wherein the anionic latex composition further comprises polystyrene seeds.

### Embodiment 13:

The emulsion system according to any of embodiments 1 to 12, wherein the anionic latex composition further comprises at least one additive selected from the group of potassium persulfate, sodium bicarbonate, and combinations thereof.

### Embodiment 14:

The emulsion system according to any of embodiments 1 to 13, wherein said emulsion system comprises:
a) the anionic latex composition comprising sodium lauryl ethoxylate sulphate, or sodium lauryl ethoxylate phosphate, each containing 2 to 30 ethylene oxide (EO) units per molecule; and
b) cetyltrimethylammonium chloride,
wherein the molar ratio of the total amount of sodium lauryl ethoxylate sulphate or sodium lauryl ethoxylate phosphate present in the emulsion system to cetyltrimethylammonium chloride present in the emulsion system is in the range of 3:1 to 1:1.

### Embodiment 15:

The emulsion system according to any of embodiments 1 to 13, wherein said emulsion system comprises:
a. the anionic latex composition comprising sodium dodecyl sulphate; and
b. 2[2-(2-hydroxydodecoxy)ethoxy]ethyl-trimethylammonium chloride,
wherein the molar ratio of the total amount of sodium dodecyl sulphate to 2[2-(2-hydroxydodecoxy)ethoxy]ethyl-trimethylammonium chloride present in the emulsion system is in the range of 3:1 to 1:1.

### Embodiment 16:

The emulsion system according to any of embodiments 1 to 13, wherein said emulsion system comprises:
a. the anionic latex composition comprising sodium lauryl ethoxylate sulphate; and
b. 2[2-(2-hydroxydodecoxy)ethoxy]ethyl-trimethyl ammonium chloride,
wherein the molar ratio of the total amount of sodium lauryl ethoxylate sulphate to 2[2-(2-hydroxydodecoxy)ethoxy]ethyl-trimethyl ammonium chloride present in the emulsion system is in the range of 3:1 to 1:1.

### Embodiment 17:

A process for the preparation of the emulsion system of any of embodiments 1 to 16, wherein said process comprises preparing the anionic latex composition comprising at least one acrylate polymer and at least one anionic surfactant, combining the at least one cationic surfactant with the anionic latex composition to form a mixture, and mixing the mixture, wherein the cationic surfactant or anionic surfactant or both contains 2 to 30 ethylene oxide (EO) units per molecule.

### Embodiment 18:

The process according to embodiment 17, wherein the molar ratio of the at least one anionic surfactant to the at least one cationic surfactant is in the range of 0.4:1 to 9:1.

### Embodiment 19:

The process according to any of embodiments 17 to 18, wherein the step of preparing the anionic latex composition comprises:
a) mixing at least one first initiator, water and polystyrene seeds in a reactor to obtain a mixture, and adjusting the pH of the mixture using at least one pH adjusting agent;
b) mixing at least one acrylate and the at least one anionic surfactant in a pre-emulsion flask to obtain an emulsion;
c) dissolving at least one second initiator in water in an initiator flask to obtain a solution;
d) transferring the emulsion (b) and the solution (c) to the reactor containing the mixture (a);
e) reacting the so obtained mixture; and,
f) adjusting the pH value of the reaction mixture obtained in the step (e).

### Embodiment 20:

The process according to embodiment 19, wherein step (a) is carried out at a temperature ranging from 30 to 95⁰C.

### Embodiment 21:

The process according to embodiment 19, wherein the step (a) is carried out using an agitator rotating at a speed of 80 to 120 rpm.

### Embodiment 22:

The process according to embodiment 19, wherein the transferring of the emulsion (b) and the potassium persulfate solution (c) is carried out in portion for a period ranging from 60 to 100 minutes.

### Embodiment 23:

The process according to embodiment 19, wherein step (e) is carried out at a temperature in the range from 70 to 95 ⁰C.

### Embodiment 24:

The process according to embodiment 20, wherein in step (f) the pH value of the reaction mixture is adjusted to pH 6.5 to 8.5.

### Embodiment 25:

The process according to any of the embodiments 19 to 23, wherein the process further comprises the step of cooling the reaction mixture obtained from step (e) before adjusting the pH value.

### Embodiment 26:

In accordance with the present invention there is provided a coating composition comprising the emulsion system according to any of the embodiments 1 to 16.

### Embodiment 27:

In accordance with the present invention there is provided use of the emulsion system according to any of the claims 1 to 16 as a coating paint.

Advantages of the presently claimed invention:
- The emulsion system of the present invention has lower surface tension.
- The emulsion system of the present invention has improved hydrophobicity.
- The emulsion system of the present invention has improved stain resistance and solvent resistance.

Although the embodiments disclosed herein have been described with reference to particular embodiments it is to be understood that these embodiments are merely illustrative of the principles and applications of the presently claimed invention. It will be apparent to those skilled in the art that various modifications and variations can be made to the methods and apparatus of the presently claimed invention without departing from the spirit and scope of the presently claimed invention. Thus, it is intended that the presently claimed invention include modifications and variations that are within the scope of the appended claims and their equivalents, and the above-described embodiments are presented for purposes of illustration and not of limitation.

## Claims

1. An emulsion system obtainable by a process comprising mixing of:
a) an anionic latex composition comprising at least one acrylate polymer and at least one anionic surfactant; and
b) at least one cationic surfactant,
wherein the molar ratio of the at least one anionic surfactant to the at least one cationic surfactant is in the range of 0.4: 1 to 9:1,
wherein the cationic surfactant or anionic surfactant or both contains 2 to 30 ethylene oxide (EO) units per molecule.

2. The emulsion system according to claim 1, wherein the at least one anionic surfactant is selected from sodium lauryl ethoxylate sulphate, sodium lauryl ethoxylate phosphate, sodium dodecyl sulphate, sodium dioctyl sulfosuccinate, or combinations thereof.

3. The emulsion system according to claim 1, wherein the at least one anionic surfactant is sodium lauryl ethoxylate sulphate, or sodium lauryl ethoxylate phosphate, each containing 2 to 30 ethylene oxide (EO) units per molecule.

4. The emulsion system according to claim 1, wherein the at least one anionic surfactant is sodium lauryl ethoxylate sulphate, or sodium lauryl ethoxylate phosphate, each containing 2 to 12 ethylene oxide (EO) units per molecule.

5. The emulsion system according to claim 1, wherein the at least one anionic surfactant is sodium lauryl ethoxylate sulphate, or sodium lauryl ethoxylate phosphate, each containing 2 to 7 ethylene oxide (EO) units per molecule.

6. The emulsion system according to any of claims 1 to 5, wherein the at least one cationic surfactant is selected from cetyltrimethylammonium chloride, 2[(2-hydroxydodecoxy) ethoxy]ethyl-trimethyl ammonium chloride containing 2 to 6 ethylene oxide (EO) units per molecule, or combinations thereof.

7. The emulsion system according to any of claims 1 to 6, wherein the molar ratio of the at least one anionic surfactant to the at least one cationic surfactant is 3:1 to 1:1.

8. The emulsion system according to any of claims 1 to 7, wherein the molar ratio of the at least one anionic surfactant to the at least one cationic surfactant is 1:1.

9. The emulsion system according to any of claims 1 to 8, wherein the amount of the at least one cationic surfactant in the emulsion system is not higher than the amount of at least one anionic surfactant therein.

10. The emulsion system according to any of claims 1 to 9, wherein the acrylate polymer comprises one or more monomers in polymerized form selected from methyl methacrylate, 2-ethylhexyl acrylate, ethyl acrylate, (meth)acrylic acid, ethyl imidazolidone methacrylate, n-butyl acrylate, n-dodecyl methacrylate, methyl methacrylate, 2-ethylbutyl acrylate, hexyl acrylate, 2-ethylhexyl acrylate, nonyl acrylate, octyl acrylate, sec-butyl acrylate, dodecyl acrylate, isobutyl acrylate, isopropyl acrylate, acrylonitrile, or combinations thereof.

11. The emulsion system according to any of claims 1 to 10, wherein the acrylate polymer further comprises one or more monomers in polymerized form selected from butadiene, styrene, vinyl acetate, or combinations thereof.

12. The emulsion system according to any of claims 1 to 11, wherein the anionic latex composition further comprises polystyrene seeds.

13. The emulsion system according to any of claims 1 to 12, wherein the anionic latex composition further comprises at least one additive selected from initiators, pH adjusting agents, or any combination thereof.

14. The emulsion system according to any of claims 1 to 13, wherein said emulsion system comprises:
a) the anionic latex composition comprising sodium lauryl ethoxylate sulphate, or sodium lauryl ethoxylate phosphate, each containing 2 to 30 ethylene oxide (EO) units per molecule; and
b) cetyltrimethylammonium chloride,
wherein the molar ratio of the total amount of sodium lauryl ethoxylate sulphate or sodium lauryl ethoxylate phosphate present in the emulsion system to cetyltrimethylammonium chloride present in the emulsion system is in the range of 3:1 to 1:1.

15. The emulsion system according to any of claims 1 to 13, wherein said emulsion system comprises:
a. the anionic latex composition comprising sodium dodecyl sulphate; and
b. 2[2-(2-hydroxydodecoxy)ethoxy]ethyl-trimethylammonium chloride,
wherein the molar ratio of the total amount of sodium dodecyl sulphate to 2[2-(2-hydroxydodecoxy)ethoxy]ethyl-trimethylammonium chloride present in the emulsion system is in the range of 3:1 to 1:1.

16. The emulsion system according to any of claims 1 to 13, wherein said emulsion system comprises:
a. the anionic latex composition comprising sodium lauryl ethoxylate sulphate; and
b. 2[2-(2-hydroxydodecoxy)ethoxy]ethyl-trimethyl ammonium chloride,
wherein the molar ratio of the total amount of sodium lauryl ethoxylate sulphate to 2[2-(2-hydroxydodecoxy)ethoxy]ethyl-trimethyl ammonium chloride present in the emulsion system is in the range of 3:1 to 1:1.

17. A process for the preparation of the emulsion system of any of claims 1 to 16, wherein said process comprises preparing the anionic latex composition comprising at least one acrylate polymer and at least one anionic surfactant, combining the at least one cationic surfactant with the anionic latex composition to form a mixture, and mixing the mixture, wherein the cationic surfactant or anionic surfactant or both contains 2 to 30 ethylene oxide (EO) units per molecule.

18. The process according to claim 16, wherein the molar ratio of the at least one anionic surfactant to the at least one cationic surfactant is in the range of 0.4:1 to 9:1.

19. The process according to any of claims 17 to 18, wherein the step of preparing the anionic latex composition comprises:
a) mixing at least one first initiator, water and polystyrene seeds in a reactor to obtain a mixture, and adjusting the pH of the mixture using at least one pH adjusting agent;
b) mixing at least one acrylate and the at least one anionic surfactant in a pre-emulsion flask to obtain an emulsion;
c) dissolving at least one second initiator in water in an initiator flask to obtain a solution;
d) transferring the emulsion (b) and the solution (c) to the reactor containing the mixture (a);
e) reacting the so obtained mixture; and,
f) adjusting the pH value of the reaction mixture obtained in the step (e).

20. The process according to claim 19, wherein step (a) is carried out at a temperature ranging from 30 to 95⁰C.

21. The process according to claim 19, wherein the step (a) is carried out using an agitator rotating at a speed of 80 to 120 rpm.

22. The process according to claim 19, wherein the transferring of the emulsion (b) and potassium persulfate solution (c) is carried out in portion for a period ranging from 60 to 100 minutes.

23. The process according to claim 19, wherein step (e) is carried out at a temperature in the range from 70 to 95 ⁰C.

24. The process according to claim 19, wherein in step (f) the pH value of the reaction mixture is adjusted to pH 6.5 to 8.5.

25. The process according to any of the claims 19 to 23, wherein the process further comprises the step of cooling the reaction mixture obtained from step (e) before adjusting the pH value.

26. A coating composition comprising the emulsion system according to any of the claims 1 to 16.

27. Use of the emulsion system according to any of the claims 1 to 16 as a coating paint.
